# DEMANDE DE BREVET EUROPEEN

(11) **EP 4 678 429 A1**
(43) Date de publication de la demande: **14.01.2026**
(21) Numéro de dépôt: 25181849.8
(22) Date de dépôt: 10.06.2025
(51) Int. Cl.: B60H 1/00

(54) **VEHICULE AUTOMOBILE COMPRENANT UNE CANALISATION A VOLETS EQUIPES DE STRUCTURES DE PISTE, ET PROCEDE DE FABRICATION D'UN TEL VEHICULE AUTOMOBILE**

(30) Priorité: 09.07.2024 FR 2407485
(71) Demandeur: Stellantis Auto SAS, 78300 Poissy (FR); Faurecia Intérieur Industrie, 92000 Nanterre (FR)
(72) Inventeur: TAVARES, Romeo, 60110 MERU (FR); BUI, Than-Tu, 60110 MERU (FR)
(74) Mandataire: BCIP

(57) **Abrégé**

Véhicule automobile comprenant une conduite d'aération qui comprend des parois droite (12a) et gauche (12b), des volets rotatifs droit (8) et gauche (9), des guides de volet (8a, 9a), un système de commande desdits volets (8, 9), comprenant un moyen de commande (1), un pion (3) d'une cheville tournante (2), des structures de piste droite (4a) et gauche (5a) portant des pistes de coulissement (4, 5) correspondantes, connectées au pion (3), les structures de piste (4a, 5a) sont connectées au volet correspondant (8, 9) de préférence au niveau des guide de volet (8a, 9a), et le pion (3) se déplaçant, déplace les structures de piste (4a, 5a) l'une par rapport à l'autre latéralement, et ainsi, déplace les volets (8, 9).

## Description

L'invention se rapporte au domaine des dispositifs d'aération de véhicule automobiles, et plus particulièrement des dispositifs de volet d'aération (encore appelés déflecteur ou ailettes) dans une conduite d'aération.

Dans ce domaine, les véhicules automobiles comprennent des volets d'aération connectés à un axe couplé à un moyen de commande mécanique manuelle, ou électrique via un moteur. Ces mécanismes obligent à prévoir un même mouvement synchronisé des volets dans un sens de rotation donné, avec une commande.

D'autres mécanismes prévoient des volets ayant différents mouvements de rotation, mais obligent à avoir autant de commandes de rotation que de mouvements de volets. Dans certains cas, une autre commande est prévue pour la fermeture de la conduite d'air via les volets.

Un objectif de la présente invention est de remédier aux défauts de l'art antérieur, et notamment de proposer une solution de mouvements de volets différents en limitant le nombre de commandes.

Pour atteindre cet objectif, l'invention propose un véhicule automobile comprenant une conduite d'aération dans un repère dans l'espace comprenant un axe longitudinal suivant une direction de circulation d'air de la conduite d'aération ; un axe latéral perpendiculaire à l'axe longitudinal définissant un côté droit et un côté gauche ; et un axe vertical perpendiculaire à l'axe longitudinal et à l'axe latéral, la conduite d'aération comprenant :
- une paroi droite et une paroi gauche définissant latéralement la conduite d'aération en référence à l'axe latéral ;
- un volet droit monté rotatif autour d'un axe de volet droit orienté suivant l'axe vertical, le volet droit présentant un bord libre droit pouvant venir en contact avec la paroi droite ;
- un premier guide de volet limitant les mouvements de rotation du volet droit entre une position de fermeture dans laquelle le bord libre droit vient en contact avec la paroi droite, et une position d'ouverture dans laquelle le volet droit est parallèle aux parois droite et gauche ;
- un volet gauche monté rotatif autour d'un axe de volet gauche orienté suivant l'axe vertical, le volet gauche présentant un bord libre gauche pouvant venir en contact avec la paroi gauche ;
- un deuxième guide de volet limitant les mouvements de rotation du volet gauche entre une position de fermeture dans laquelle le bord libre gauche vient en contact avec la paroi gauche, et une position d'ouverture dans laquelle le volet gauche est parallèle aux parois droite et gauche ;
- un système de commande commandant lesdits volets,
le système de commande comprenant :
- un moyen de commande rotatif comportant un axe de commande vertical suivant l'axe vertical ;
- une cheville tournante montée rotative sur l'axe de commande, comportant un pion de cheville vertical suivant l'axe vertical ;
- une structure de piste droite portant une première piste de coulissement qui présente au moins une concavité orientée vers l'axe de commande, le pion de cheville étant connecté à ladite première piste et étant apte à coulisser dans ladite première piste ;
- une structure de piste gauche portant une deuxième piste de coulissement qui présente au moins une concavité orientée vers l'axe de commande, le pion de cheville étant connecté à ladite deuxième piste et étant apte à coulisser dans ladite deuxième piste ;
   caractérisé en ce que la structure de piste droite est connectée au volet droit de préférence au niveau du premier guide de volet ; et la structure de piste gauche est connectée au volet gauche de préférence au niveau du deuxième guide de volet,
   et en ce que lorsque le pion de cheville se déplace dans les pistes de coulissement, le pion de cheville applique une force qui déplace les structures de piste l'une par rapport à l'autre de manière synchronisée vers la gauche ou vers la droite, les structures de piste étant connectées aux volets les déplacent en conséquence vers la droite ou vers la gauche.

Avantageusement, grâce au mécanisme de l'invention, les mouvements de tous les volets sont réalisés au moyen d'une seule commande ou un moteur ; le système est compact ; et la fermeture de la conduite est dans le prolongement de la réduction de la sortie d'air.

La connexion des structures de pistes au même pion de cheville permet de n'avoir qu'une seule commande des deux structures de piste pour qu'elles se déplacent de manière synchronisée, afin de pouvoir effectuer les quatre positions extrêmes des volets, ainsi que les positions intermédiaires qui permettent de gérer le débit de passage.

De préférence, le moyen de commande rotatif comprend un moteur

Cela permet de limiter les manipulations de l'utilisateur.

Préférentiellement, le moyen de commande rotatif comprend un moyen de commande manuel.

Cela permet de limiter la consommation d'énergie du véhicule automobile.

De préférence, la première piste de coulissement présente deux concavités orientées vers l'axe de commande, et la deuxième piste de coulissement présente une concavité orientée vers l'axe de commande.

Cela permet de faciliter la mise en œuvre de plusieurs différentes positions des volets.

Préférentiellement, les pistes de coulissement s'étendent de l'avant vers l'arrière en référence à l'axe longitudinal, et en ce que le système de commande est mobile entre quatre configurations :
- dans une première configuration, le pion de cheville est pivoté vers l'avant en référence en référence à l'axe longitudinal, le volet droit est en position d'ouverture et le volet gauche est en position de fermeture ;
- dans une deuxième configuration, le pion de cheville est pivoté vers une position intermédiaire avant en référence à l'axe longitudinal, le volet droit et le volet gauche sont en position d'ouverture ;
- dans une troisième configuration, le pion de cheville est pivoté vers une position intermédiaire arrière en référence à l'axe longitudinal, le volet droit est en position de fermeture et le volet gauche est en position d'ouverture ; et
- dans une quatrième configuration, le pion de cheville est pivoté vers une position arrière en référence en référence à l'axe longitudinal, le volet droit et le volet gauche sont en position de fermeture.

Cela permet de prévoir ces quatre configurations successives commandées par un seul moyen de commande.

De préférence, le véhicule automobile comprend un système d'air conditionné qui comprend la conduite d'aération.

Cela permet de faciliter la commande de l'aération d'un tel système d'air conditionné.

Un autre objet de l'invention concerne un procédé de commande de volets d'une conduite d'aération d'un véhicule automobile selon l'invention, caractérisé en ce qu'il comprend au moins une étape de commande des deux volets par l'intermédiaire du moyen de commande.

L'invention sera davantage détaillée par la description de modes de réalisation non limitatifs, et sur la base des figures annexées dans lesquelles :
- [Fig. 1] illustre schématiquement une vue de dessus d'une conduite d'aération selon un mode de réalisation préféré de l'invention, dans une configuration ouverte ;
- [Fig. 2] illustre schématiquement une vue de dessus de la conduite d'aération de la figure précédente, dans une configuration partiellement fermée à gauche ;
- [Fig. 3] illustre schématiquement une vue de dessus de la conduite d'aération des figures précédentes, dans une configuration partiellement fermée à droite ;
- [Fig. 4] illustre schématiquement une vue de dessus de la conduite d'aération des figures précédentes, dans une configuration fermée ;

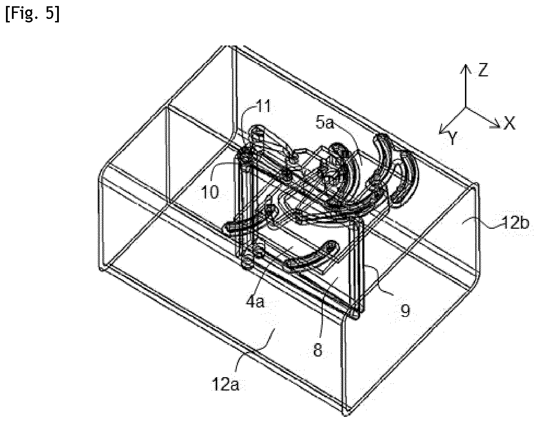

- [Fig. 5] illustre schématiquement une vue dans l'espace de la conduite d'aération des figures précédentes, dans la configuration ouverte.

L'invention propose un véhicule automobile qui comprend une conduite d'aération décrite en référence à un repère dans l'espace comprenant un axe longitudinal X suivant une direction de circulation d'air de la conduite d'aération ; un axe latéral Y perpendiculaire à l'axe longitudinal X, et un axe vertical Z perpendiculaire à l'axe longitudinal X et à l'axe latéral Y.

Le véhicule automobile comprend un système de volets de la conduite d'air.

Le véhicule comprend :
- un moteur 1 (ou plus généralement une commande pouvant être manuelle) présentant un axe de commande ;
- une cheville tournante 2 montée rotative autour de l'axe de commande dans deux sens de rotation ; la cheville présente en outre un axe de cheville perpendiculaire à la cheville, et portant un pion de cheville 3 ;
- une première et une deuxième structures de piste 4a, 5a portant chacune une piste de coulissement 4, 5, le pion de cheville 3 reliant la cheville aux pistes de coulissement 4 et 5 ;
- un premier et un deuxième volets 8, 9 rotatif autour d'un axe de volet 10, 11 respectif parallèle à l'axe de commande et au pion de cheville 3. Des guides de volets 8a, 9a sont prévus pour limiter l'amplitude des mouvements des volets. Un pion de contrôle de volet 6, 7 ressort du volet et est inséré dans le guide correspondant.

Le moteur 1 permet d'activer la rotation de la cheville tournante 2. L'axe de commande est connecté à la cheville tournante 2. Quand le pion de cheville 3 se déplace dans les pistes de coulissement 4, 5, il applique une force qui permet de déplacer la structure de piste 4a, 5a

Les structures de pistes sont connectées en 3 points chacune, ce qui permet d'en contrôler le mouvement. La structure de piste 4a, 5a est reliée au pion de contrôle de volet 6, 7 : lorsque la structure de piste se déplace, elle pousse ou tire le pion de contrôle de volet 6, 7. Ensuite, le volet 8, 9 peut être déplacé par rotation autour de son axe de rotation 10, 11. Cette fonction permet de déplacer le volet 8, 9, dans la conduite 12a, 12b et d'autoriser ou empêcher la circulation d'air à travers la conduite.

Les volets 8, 9 sont synchronisés par l'axe de cheville 3 coulissant dans les pistes 4, 5.

L'action du moteur 1 sur la cheville tournante 2 entraine le coulissement du pion cheville 3 dans les pistes 4, 5.

Dans la variante illustrée, une piste est concentrique avec le moteur 1 et ne se déplace pas. L'autre piste se déplace.

La connexion de la piste 4, 5 au pion de contrôle de volet 6, 7, fait que la piste 4, 5 et le volet 8, 9 se déplacent en même temps que la piste.

Ainsi, le volet 9 se déplace aussi en suivant la position enregistrée dans le système.

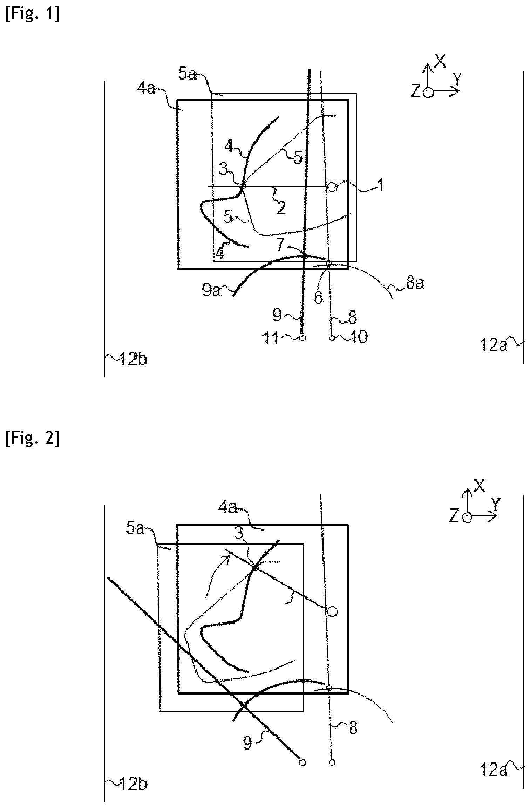

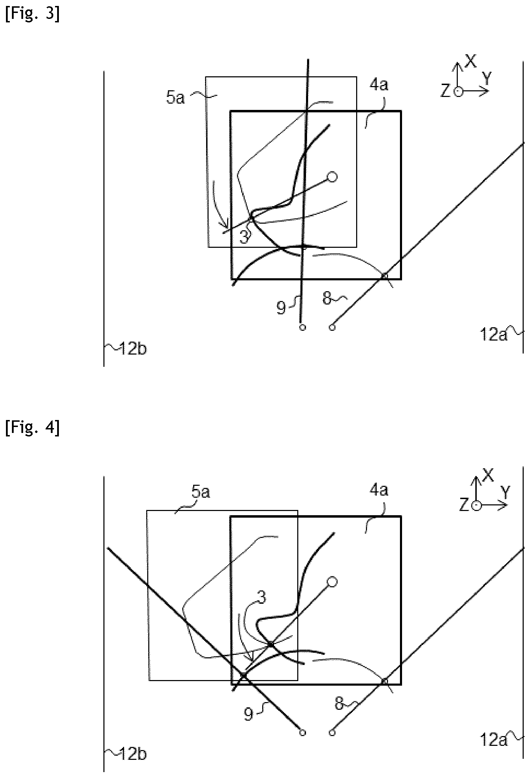

Le coulissement de l'axe de cheville 3 dans la piste 4, 5 permet d'ajuster le volet 8, 9 dans une première directivité illustrée en figure 2, ou une première directivité illustrée en figure 3.

Une surcourse des volets permet d'avoir une position de fermeture (illustré en figure 4) et aucun flux d'air ne passe par la conduite.

L'invention porte en outre sur un procédé de commande de volets d'une conduite d'aération d'un véhicule automobile, comprenant des étapes commande des éléments décrits ci-dessus.

Le procédé comprend des étapes de commande des deux volets 8, 9 par l'intermédiaire du moyen de commande 1, dans les différentes directivités.

## Revendications

1. Véhicule automobile comprenant une conduite d'aération dans un repère dans l'espace comprenant un axe longitudinal (X) suivant une direction de circulation d'air de la conduite d'aération ; un axe latéral (Y) perpendiculaire à l'axe longitudinal (X) définissant un côté droit et un côté gauche ; et un axe vertical (Z) perpendiculaire à l'axe longitudinal (X) et à l'axe latéral (Y), la conduite d'aération comprenant :
- une paroi droite (12a) et une paroi gauche (12b) définissant latéralement la conduite d'aération en référence à l'axe latéral (Y) ;
- un volet droit (8) monté rotatif autour d'un axe de volet droit (10) orienté suivant l'axe vertical (Z), le volet droit (8) présentant un bord libre droit pouvant venir en contact avec la paroi droite (12a) ;
- un premier guide de volet (8a) limitant les mouvements de rotation du volet droit (8) entre une position de fermeture dans laquelle le bord libre droit vient en contact avec la paroi droite (12a), et une position d'ouverture dans laquelle le volet droit (8) est parallèle aux parois droite et gauche (12a, 12b) ;
- un volet gauche (9) monté rotatif autour d'un axe de volet gauche (11) orienté suivant l'axe vertical (Z), le volet gauche (9) présentant un bord libre gauche pouvant venir en contact avec la paroi gauche (12b) ;
- un deuxième guide de volet (9a) limitant les mouvements de rotation du volet gauche (9) entre une position de fermeture dans laquelle le bord libre gauche vient en contact avec la paroi gauche (12b), et une position d'ouverture dans laquelle le volet gauche est parallèle aux parois droite et gauche (12a, 12b) ;
- un système de commande commandant lesdits volets (8, 9),
le système de commande comprenant :
- un moyen de commande rotatif (1) comportant un axe de commande vertical suivant l'axe vertical (Z) ;
- une cheville tournante montée rotative sur l'axe de commande, comportant un pion de cheville (3) vertical suivant l'axe vertical (Z) ;
- une structure de piste droite (4a) portant une première piste de coulissement (4) qui présente au moins une concavité orientée vers l'axe de commande, le pion de cheville (3) étant connecté à ladite première piste (4) et étant apte à coulisser dans ladite première piste (4) ;
- une structure de piste gauche (5a) portant une deuxième piste de coulissement (5) qui présente au moins une concavité orientée vers l'axe de commande, le pion de cheville (3) étant connecté à ladite deuxième piste (5) et étant apte à coulisser dans ladite deuxième piste (4) ;
**caractérisé en ce que** la structure de piste droite (4a) est connectée au volet droit (8) de préférence au niveau du premier guide de volet (8a) ; et la structure de piste gauche (5a) est connectée au volet gauche (9) de préférence au niveau du deuxième guide de volet (9a),
et **en ce que** lorsque le pion de cheville (3) se déplace dans les pistes de coulissement (4, 5), le pion de cheville (3) applique une force qui déplace les structures de piste (4a, 5a) l'une par rapport à l'autre de manière synchronisée vers la gauche ou vers la droite, les structures de piste (4a, 5a) étant connectées aux volets (8, 9) les déplacent en conséquence vers la droite ou vers la gauche.

2. Véhicule automobile selon la revendication 1, **caractérisé en ce que** le moyen de commande rotatif (1) comprend un moteur.

3. Véhicule automobile selon la revendication 1, **caractérisé en ce que** le moyen de commande rotatif (1) comprend un moyen de commande manuel.

4. Véhicule automobile selon l'une quelconque des revendications 1 à 3, **caractérisé en ce que** la première piste de coulissement (4) présente deux concavités orientées vers l'axe de commande, et la deuxième piste de coulissement (5) présente une concavité orientée vers l'axe de commande.

5. Véhicule automobile selon l'une quelconque des revendications 1 à 4, **caractérisé en ce que** les pistes de coulissement (4, 5) s'étendent de l'avant vers l'arrière en référence à l'axe longitudinal (X), et **en ce que** le système de commande est mobile entre quatre configurations :
- dans une première configuration, le pion de cheville (3) est pivoté vers l'avant en référence en référence à l'axe longitudinal (X), le volet droit (8) est en position d'ouverture et le volet gauche (9) est en position de fermeture ;
- dans une deuxième configuration, le pion de cheville (3) est pivoté vers une position intermédiaire avant en référence à l'axe longitudinal (X), le volet droit (8) et le volet gauche (9) sont en position d'ouverture ;
- dans une troisième configuration, le pion de cheville (3) est pivoté vers une position intermédiaire arrière en référence à l'axe longitudinal (X), le volet droit (8) est en position de fermeture et le volet gauche (9) est en position d'ouverture ; et
- dans une quatrième configuration, le pion de cheville (3) est pivoté vers une position arrière en référence en référence à l'axe longitudinal (X), le volet droit (8) et le volet gauche (9) sont en position de fermeture.

6. Véhicule automobile selon l'une quelconque des revendications 1 à 5, **caractérisé en ce qu'**il comprend un système d'air conditionné qui comprend la conduite d'aération.

7. Procédé de commande de volets d'une conduite d'aération d'un véhicule automobile selon l'une quelconque des revendications 1 à 6, **caractérisé en ce qu'**il comprend au moins une étape de commande des deux volets par l'intermédiaire du moyen de commande (1).
